# EUROPEAN PATENT SPECIFICATION

(11) **EP 0 602 685 B1**
(45) Date of publication and mention of the grant of the patent: **22.05.1996**
(21) Application number: 93120460.6
(22) Date of filing: 17.12.1993
(51) Int. Cl.: F16H 61/02, F16H 59/08

(54) **Control device for an automated transmission of an industrial vehicle**
Steuervorrichtung für ein automatisiertes Getriebe eines Nutzfahrzeuges
Dispositif de commande pour une transmission automatisée d'un véhicule industriel

(30) Priority: 18.12.1992 IT TO921025
(43) Date of publication of application: 22.06.1994
(73) Proprietor: IVECO FIAT S.p.A., I-10156 Torino (IT)
(72) Inventor: Lupi, Luigi, 26010 Robecco D'Oglio (IT); Tornatore, Giovanni, 10080 San Benigno Canavese (IT); Salay, Klaus, D-88487 Baltringen (DE)
(74) Representative: Boggio, Luigi

(56) References cited:
- EP-A- 0 107 761
- EP-A- 0 170 465
- EP-A- 0 378 218
- EP-A- 0 400 419
- EP-A- 0 450 286
- EP-A- 0 466 036

## Description

The present invention relates to a control device for an automated transmission of an industrial vehicle and in particular for a gear change.

Gear changes with a high number of gears, for instance twelve or sixteen forward gears and two or more reverse gears, are used in industrial vehicles. Manual actuation by a conventional selection lever is therefore an awkward operation which may require a substantial physical effort on the part of drivers and may in some case distract their attention from the road. Moreover, drivers must be very experienced for the optimum selection of the gear to be engaged and must take account of the operating situation of the vehicle and the rotational speed limits within which the engine has to operate so as not to be in the conditions known as "stalling" or "over-revolution", well known to Persons skilled in the art.

These problems have been only partially resolved in automated changes, in which the engagement of the gears is carried out by means of fluid actuators controlled by a central electronic unit in response to input signals generated by a manual selection device; this device generally comprises a lever which may be displaced along a plane from a central rest position into two opposite actuation positions corresponding to the engagement of the upper or lower gear with respect to the gear currently engaged.

Means are also frequently provided for the rapid engagement of a gear which is not adjacent to the gear currently engaged; these means typically consist in push-buttons and/or levers associated with the lever handle.

As an alternative, levers provided with four control positions (in opposing pairs with respect to the rest position) have also been proposed see EP-A-0 107 761 or EP-A-0 378 218 disclosing the features of the preamble of claim 1, as well as levers provided with processing systems adapted to count and total the number of actuations carried out consecutively in one of the two directions within a predetermined time see EP-A-0 170 465, and subsequently to carry out the engagement of the gear corresponding to the number of the current gear increased or decreased by the number of these actuations.

Control devices of the type described briefly above undoubtedly make gear selection easier with respect to conventional levers; however, these devices make it necessary for the driver to carry out operations which are not very intuitive and are very remote from the operating practices to which the driver is accustomed. This situation has many adverse consequences. In use, drivers must channel an excessive mental effort into the gear change operation which may distract their attention from the road; moreover, it is relatively simple to carry out incorrect manoeuvres or accidental actuations, particularly in emergency situations, with the evident risks which this entails. The training which drivers must receive in order to learn the various actuating sequences and to be able to use them with dexterity is relatively long term.

All these factors have up to now caused some resistance to the dissemination on the market of the above-mentioned devices.

The object of the present invention is to provide a control device for an automated transmission of an industrial vehicle, which is free from the drawbacks connected with the known devices mentioned above.

This object is achieved by the present invention which relates to a control device for an automated transmission of a vehicle comprising a gear change provided with fluid actuator means adapted to control the engagement and disengagement of the gears, which device comprises:
- valve means for controlling the actuator means,
- a microprocessor control unit adapted to generate control signals, at least for the valve means, in response to input signals,
- a selection lever adapted to be actuated manually by the driver, which lever moves along a plane and is adapted to be disposed in four different control positions from a central rest position, a first and a second position being disposed on one side with respect to the rest position and a third and a fourth position being disposed on an opposite side with respect to the rest position, the second and fourth position being situated at a greater distance from the rest position than the first and the third position,
- first sensor means associated with the change and adapted to supply first input signals representing the gear engaged to the control unit,
- second sensor means connected to the control unit and adapted to supply thereto a second input signal indicating the speed of the vehicle,
   this lever being provided with switch means adapted to supply to the control unit third input signals in response to the manual displacement of the lever into one of the control positions, the lever further comprising at least one push-button which may be actuated manually in combination with the lever and is adapted to supply to the control unit a fourth input signal, characterised in that the control unit comprises
   means for generating, in the presence of a first input signal indicating the engagement of a forward gear, a second input signal indicating a vehicle speed greater than a predetermined threshold value and a fourth input signal indicating the absence of actuation of the push-button, a control signal for the engagement of the first upper gear, the second upper gear, the first lower gear and the second lower gear respectively, in response to a third input signal corresponding to the manual displacement of the lever into the first, second, third or fourth position respectively, and
   means for generating, in the presence of a first input signal indicating the engagement of a forward gear, a second input signal indicating a vehicle speed greater than this predetermined threshold value and a fourth input signal indicating the actuation of the push-button, a control signal for the engagement of the highest gear compatible with a normal range of operation of the engine in response to a third input signal corresponding to the manual displacement of the lever into the first or second position, a control signal for the engagement of the lowest gear compatible with this normal range of operation of the engine in response to a third input signal corresponding to the manual displacement of the lever into the third position, and a control signal for the engagement of the lowest gear compatible with the mechanical strength of the engine and the transmission in response to a third input signal corresponding to the manual displacement of the lever into the fourth position.

The invention is set out in further detail in the following description of a preferred embodiment thereof, given by way of nonlimiting example and made with reference to the accompanying drawings, in which:
Fig. 1 is a diagram illustrating a control device of an automated transmission produced in accordance with the present invention;
Fig. 2 is a lateral elevation of a selection lever of the device of Fig. 1;
Fig. 3 is a front elevation of the lever of Fig. 2;
Fig. 4 is a logic block diagram showing the operations carried out by a control unit of the device of Fig. 1;
Fig. 5 is a logic block diagram showing in detail the operations carried out in a block of the diagram of Fig. 4.

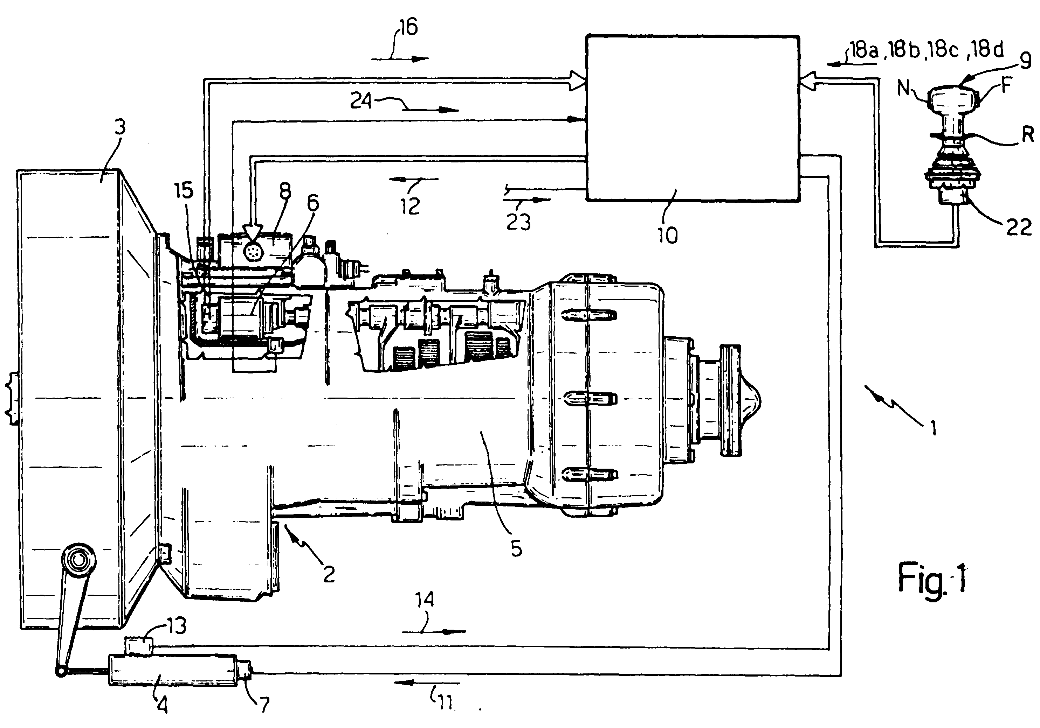

In Fig. 1, a control device of an automated transmission 2 of an industrial vehicle is shown overall by 1.

The transmission 2 comprises a clutch 3 controlled by a respective hydraulic actuator 4 for its engagement and disengagement and a gear change 5 provided with a hydraulic or pneumatic actuator unit 6, adapted to carry out the engagement and disengagement of the various gears. The change 5 is adapted to define, for instance, sixteen forward gears and two reverse gears.

The device 1 substantially comprises a proportional response electrovalve 7 for the control of the actuator 4 of the clutch 3, a valve unit 8 for the control of the actuator unit 6 of the change, a selection lever 9 adapted to be housed in a driving cabin of the vehicle and to be actuated manually by the driver, and a microprocessor control unit 10 adapted to generate control signals 11, 12 for the electrovalve 7 and the valve unit 8 respectively in response to input signals as described below.

In particular, the control unit 10 is connected to a position transducer 13 associated with the actuator 4 of the clutch 3 and adapted to supply to the unit 10 a signal 14 indicating the stroke of the clutch, a plurality of sensors 15 associated with the moving components of the actuator unit 6 and adapted to supply to the unit 10 a plurality of signals 16 representing the gear engaged, and selection means associated with the selection lever 9 and adapted to supply to the unit 10 signals 18a, 18b, 18c, 18d representing the manual actuations carried out on the lever.

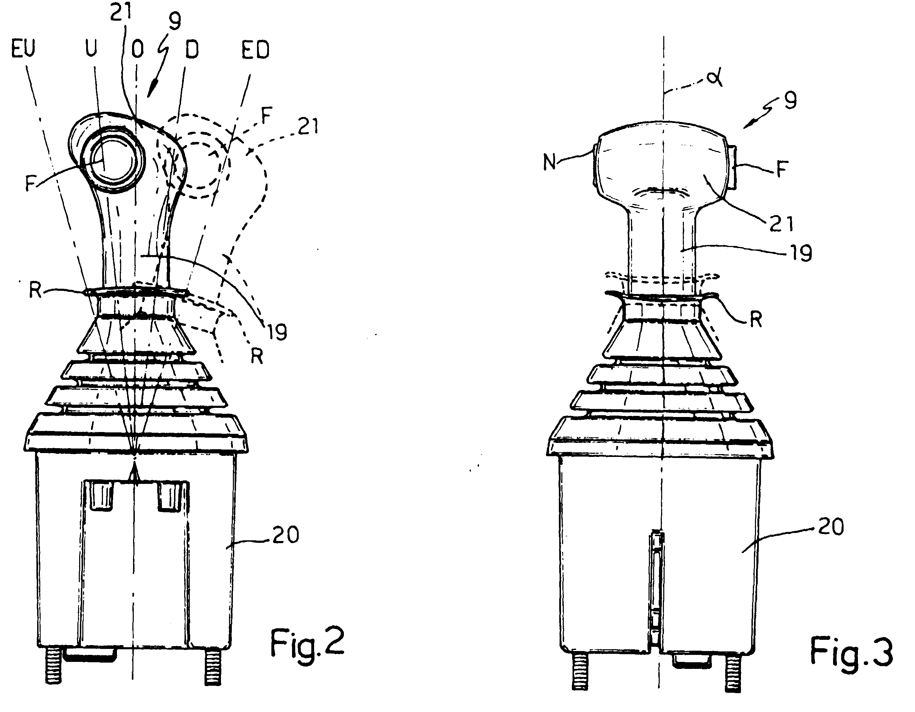

The selection lever 9 (Figs. 2 and 3) moves along a plane a longitudinal with respect to the vehicle and may be moved from a central rest position, shown in Fig. 2 by 0, into four different control positions. Two of these positions are displaced, with respect to the position 0, in the direction of forward movement of the vehicle and are conventionally indicated, in the order defined by their increasing displacement from the position 0, by U ("up") and EU ("extra-up"). The two remaining control positions are displaced, with respect to the position 0, in the direction opposite that of forward movement of the vehicle and are conventionally indicated, in the order defined by their increasing displacement from the position 0, by D ("down") and ED ("extra-down").

The lever 9 comprises a stem 19 hinged on a base 20 adapted to be secured to the vehicle, and a handle 21 placed at the free end of the stem 19. The above-mentioned selection means comprise a plurality of switches 22 of conventional type, not shown in detail, housed in the base 20 and adapted to be switched by the lever 9 (and therefore to supply corresponding signals 18a to the unit 10) when the lever is displaced into each of the control positions (U, EU, D, ED) described above. These selection means further comprise two push-buttons disposed on the sides of the handle 21, shown respectively by the letters F and N, and a collar R coaxial with the stem 19 and moving thereon between a lower rest position, maintained by resilient means (not shown), and an upper actuation position. The push-buttons F and N and the collar R actuate respective switches (not shown) connected to the control unit 10; these switches are adapted to supply to the control unit 10 respective signals 18b, 18c, 18d whose state is switched when the corresponding push-button or collar is actuated.

The control unit 10 further receives an input signal 23 proportional to the speed of the vehicle from sensor means 24 of known type, formed for instance by an angular velocity sensor of the output shaft of the gear change 5.

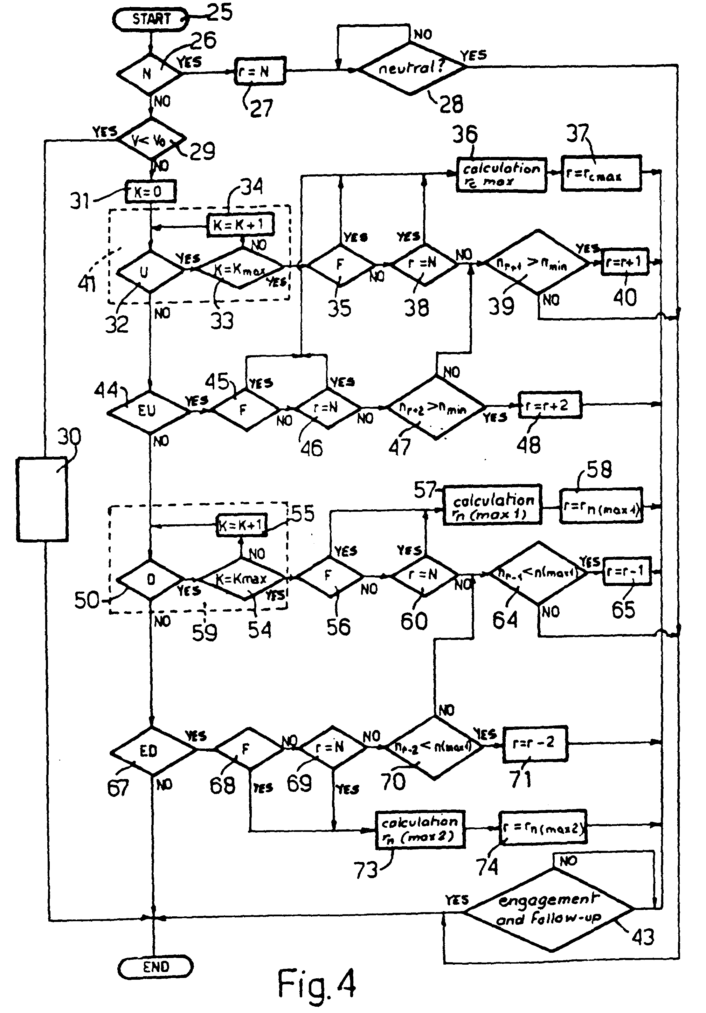

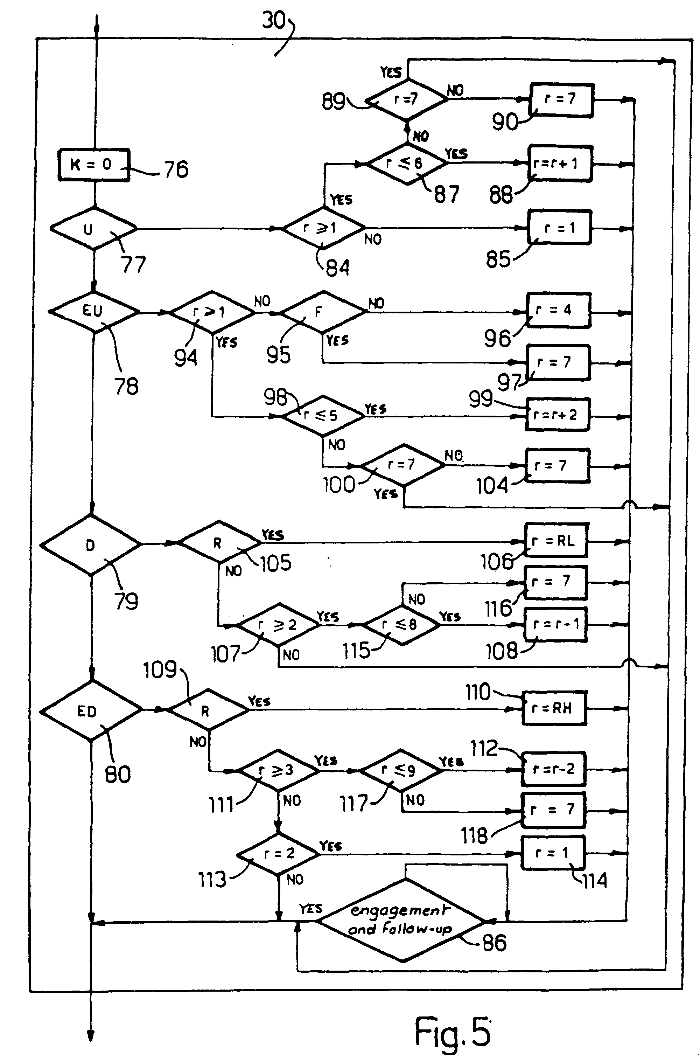

The operation of the control device 1 is described below with reference to the block diagrams of Figs. 4 and 5 which show the sequence of operations carried out cyclically by the control unit 10, as regards the actuations relating to the change 5. The control of the clutch 3 is of a conventional type and is not therefore described in detail.

For the purposes of simplicity and brevity, in cases in which the control unit carries out an operation in response to an input signal depending on a manual actuation, verification of the state or value of this signal has been replaced in the legend of the block diagrams by an indication of the relative actuation and will be described as such below. For instance, in the case in which the unit 10 verifies whether the signal 18a, corresponding to the actuation of the lever 9 into one of the control positions, is active, it is simply stated that the unit 10 verifies whether the lever has been brought into this position; it is evident, however, that verification is carried out on the signal. Similarly, in cases in which the unit 10 generates a signal adapted to control an actuator in order to carry out a certain manoeuvre, the result of the manoeuvre is indicated in the block diagram (for instance the engagement of a particular gear) in place of the actuation of the corresponding signal.

With reference to the diagram of Fig. 4, a block 25 of commencement of the cycle leads to a block 26 in which the unit 10 verifies whether the push-button N of the lever 9 has been depressed. If so, this leads to a block 27 in which the selection of neutral in the change 5 is controlled. This then leads to a block 28 which waits for the disengagement of the gear to be carried out and, if so, the end of the cycle is reached.

If, however, the push-button N has not been pressed, the block 26 leads to a block 29 in which the unit 10 verifies whether the speed of the vehicle is lower than a very low predetermined threshold value (for instance 2 km/h), i.e whether the vehicle is substantially stationary.

If so, this leads to a block 30 for the performance of the starting manoeuvres, whose sequence of operations is shown in detail in the diagram of Fig. 5.

If not, i.e. when the vehicle is in movement, transition takes place to a block 31 in which a counter k is set to 0, the purpose of this counter being explained below. The block 31 leads to a block 32 in which the unit 10 verifies whether the lever has been disposed in the position U. If so, this leads to a block 33 which verifies whether the value of the counter k is equal to a predetermined maximum value kₘₐₓ; if not, a subsequent block 34 increases the value of the counter k by one unit and transition takes place back to the block 32. When the value of the counter k reaches kₘₐₓ, i.e. when the lever 9 has been maintained in the position U for a predetermined time, transition takes place to a successive block 35. In practice, the blocks 32, 33, 34 define, overall, a waiting block 41 needed to discover whether the lever 9 has been voluntarily brought into the position U or whether this position has been reached only transitionally, for a very short period, while the lever is being displaced to the position EU. In this latter case, the control U therefore has to be ignored by the unit 10.

The block 35 verifies whether the push-button F has been depressed; if not, the block 35 leads to a block 38 in which the unit 10 verifies whether the change is in the neutral condition. If the change is not in neutral but a forward gear (r) is engaged, transition takes place to a block 39 where it is verified whether the gear (r+1) above that currently engaged is admissible, i.e. whether, taking account of the angular speed of the vehicle, this new gear would lead to an engine speed greater than the minimum speed admissible to prevent stalling; if the new gear is not admissible, the request is ignored and the end of the cycle is reached. If this gear is admissible, however, transition takes place to a block 40 which controls its engagement and then to a block 43 which, on the basis of the value of the signals 16, verifies whether the gear has been engaged. If so, the end of the cycle is reached; if not, transition takes place upstream to the block 43 which therefore constitutes a waiting block verifying that engagement of the preselected gear has taken place.

The block 35, if the push-button F has been depressed, and the block 38, if the neutral condition has been detected, lead to a block 36 which calculates, on the basis of the signal 23 and the transmission ratios of the various gears, the highest possible gear r_{cmax} (i.e. which determines a speed of rotation of the engine corresponding to the maximum torque condition which may be supplied without causing the engine to stall); this then leads to a block 37 in which its engagement is controlled, and finally to a waiting and verification of engagement block 43.

If the lever 9 has not been brought into the position U (or has not been maintained there for a sufficient time) the block 32 leads to a block 44 which verifies whether the lever has been brought into the position EU.

In the presence of the control EU, transition takes place to a block 45 which verifies whether the push-button F has been depressed; if so, transition takes place to the block 46 and processing continues as described above; if not, transition takes place to a block 46 which verifies whether the change is in the neutral condition. If so, transition again takes place to the block 36; if, however, the change is not in neutral but a forward gear is engaged, transition takes place to a block 47 which verifies whether the second gear above the gear currently engaged is admissible (in the direction specified above). If this new gear is admissible, transition takes place to a block 48 which controls its engagement and finally to the waiting and verification of engagement block 43. If the requested gear is not admissible, however, transition takes place to the block 39 described above.

If the lever has not been brought into the position EU, the block 44 leads to a block 50 in which the unit 10 verifies whether the lever has been brought into the position D. If so, transition takes place to a block 54 which verifies whether the value of the counter k is equal to a maximum predetermined value kₘₐₓ; if not, a subsequent block 55 increases the value of the counter k by one unit and returns to the block 50. When the value of the counter k reaches kₘₐₓ, i.e. when the lever 9 has been maintained in the position D for a predetermined time, transition takes place to a subsequent block 56. In practice, the blocks 50, 54, 55 define, overall, a waiting block 59 (similar to the block 41) adapted to discover whether the lever 9 has been voluntarily brought into the position D or whether this position has been reached only transitionally, for a very short period, while the lever is being moved into the position ED. In this latter case the control D must therefore be ignored by the unit 10.

The block 56 verifies whether the push-button F has been depressed. If so, transition takes place to a block 57 which calculates, on the basis of the signal 23 and the transmission ratios of the various gears, the gear rₙ(ₘₐₓ₁) which corresponds to a speed of rotation of the engine [n(max1)] close to the angular speed of supply of maximum power [n(Pmax)], for instance between 70 and 90 n(Pmax), and then to a block 58 in which engagement is controlled.

This then leads to a waiting block 43 verifying the engagement of the new gear.

If the push-button F has not been depressed, the block 56 leads to a block 60 in which the unit 10 verifies whether the gear change is in the neutral condition. If so, transition takes place to the block 57 and processing continues as described above; if the change is not in neutral, but a forward gear is engaged, transition takes place to a block 64 which verifies whether the gear below that currently engaged is admissible, i.e. whether,' taking account of the vehicle speed, this new gear would lead to an engine speed lower than a predetermined limit, for instance n(max1), in order to prevent the engine from over-rotating; if the new gear is not admissible, the request is ignored and the end of the cycle is reached. If, however, this new gear is admissible, transition takes place to a block 65 which controls its engagement and then to the waiting block 43 verifying that engagement has taken place.

If the lever 9 is not brought into the position D, or is not maintained there for a sufficient time, the block 50 leads to a block 67 which verifies whether the lever has been brought into the position ED.

If so, transition takes place to a block 68 which verifies whether the push-button F has been depressed. If not, transition takes place to a block 69 which verifies whether the change is in the neutral condition. If there is a further negative response, i.e. if a forward gear is engaged, transition takes place to a block 70 which verifies whether the second gear below the gear currently engaged is admissible (in the direction specified above, with reference to the threshold values n(max1)).

If this new gear is admissible, transition takes place to a block 71 which controls its engagement, then to the waiting block 43 verifying engagement. If the gear requested is not admissible, however, transition takes place to the block 64 described above in which the admissibility of a unit ascent is evaluated.

The block 68, if the push-button F has been depressed, and the block 69, if the neutral condition has been detected, lead to a block 73 which calculates, on the basis of the speed of the vehicle and the transmission ratios of the gear change, the gear which would correspond to an angular speed value of the engine close to the mechanical strength limit of the engine and the clutch, which may therefore be obtained only in exceptional cases of absolute emergency. This value may for instance be n(max2) = 115% n(Pmax).

Transition then takes place to a block 74 which controls the engagement of this gear and then to the waiting block 43 verifying that engagement has taken place.

Following analysis of the operations carried out by the unit 10 when the vehicle is in movement (v > vₒ), we shall now examine operation during starting manoeuvres (v < vₒ), in which case the block 29 leads to the block 30 whose various functions are described in detail with reference to Fig. 5.

The operations linked to the verificatiOn of the manual actuation of the lever 9 are completely identical to those described above and are therefore described very briefly; reference should be made to the equivalent blocks of Fig. 4 for a more detailed description.

Transition takes place in the first instance to a zero-setting block 76 of a counter, identical to the block 31, and then to a block 77 equivalent to the block 32, which verifies whether the lever has been brought into the position U and has been maintained there for a sufficient time for acceptance of the control. If not, transition takes place to a subsequent block 78 (identical to the block 44) which verifies whether the lever has been brought into the position EU.

If this actuation has not taken place, transition takes place to a subsequent block 79 (corresponding to the block 59) which verifies whether the lever 9 has been brought into the position D for a sufficient time. If not, transition takes place to a block 80 which detects any actuation of the lever into the position ED. If actuation is again absent, the end of the cycle is reached.

In the presence of a control U, the block 77 leads to a block 84 which verifies whether a forward gear is engaged. If not, i.e. in the case in which the gear change is in neutral or a reverse gear is engaged, transition takes place to a block 85 which controls the engagement of the first forward gear and then to a block 86, equivalent to a block 43, which waits and verifies that the gear selected has been engaged.

If, however, a forward gear is engaged, the block 84 leads to a block 87 which verifies whether the gear engaged is lower than or equal to the gear immediately below the highest gear with which the vehicle may be started in the absence of a load (indicated below by the term "highest starting gear"). In the case illustrated, bearing in mind that starting may be carried out with one of the gears between 1 and 7 (inclusive), the block 87 verifies whether the number of the gear engaged is lower than or equal to 6.

If so, transition takes place to a block 88 which controls the engagement of the gear immediately above the gear engaged; on the basis of the above, the new gear is at most the seventh and therefore such as to allow starting in the presence of appropriate load conditions. Transition takes place finally to the block 86.

If not, the block 87 leads to a block 89 which verifies whether the gear engaged is the maximum gear for carrying out starting (in this specific case the seventh gear); if so, no further operation is carried out and the end of the cycle is reached; if not, i.e. if the gear engaged is incompatible with a starting manoeuvre (in this specific case the eighth or a higher gear), transition takes place to a block 90 which controls the engagement of the highest starting gear (in this specific case the seventh), and then to the waiting block 86 verifying engagement.

In the presence of a control EU, the block 78 leads to a block 94 which verifies whether a forward gear is engaged. If not, i.e. in the presence of a reverse gear or neutral, transition takes place to a block 95 which verifies whether the push-button F has been depressed. If not, transition takes place to a block 96 which controls the engagement of an intermediate starting gear, for instance the fourth, and then to the block 86. If so, transition takes place to a block 97 which controls the engagement of the highest possible starting gear, in this case the seventh.

If, however, the gear previously engaged is a forward gear the block 94 leads to a block 98 which verifies whether the number of this gear is at most equal to that of the highest starting gear decreased by two units (in the example, if the gear engaged is at most the fifth). If so, transition takes place to a block 99 which controls the engagement of the forward gear whose number is equal to that of the gear currently engaged increased by two units, and finally to the block 86. If not, transition takes place to a block 100 which verifies whether the gear currently engaged is the maximum starting gear (in the example, the seventh); if so, no further operation is carried out and the end of the cycle is reached; if not, transition takes place to a block 104 which controls the engagement of the maximum starting gear, and finally to the block 86.

In the presence of a control D, the block 79 leads to a block 105 which verifies whether the collar R has been actuated; if so, transition takes place to a block 106 which controls the engagement of the "low" or "reduced" reverse gear (shown in the Figure by RL, i.e. "LOW" reverse gear) and then to the block 86. If not, transition takes place to a block 107 which verifies whether the gear currently engaged is the second forward gear or above; if not, i.e. in the case in which the change is in the first forward gear, in neutral or in a reverse gear, the control D is ignored and the end of the cycle is reached directly. If so, transition takes place to a block 115 which verifies whether the current gear is lower than or equal to the gear immediately above the highest starting gear, in this specific case the eighth gear. If so, transition takes place to a block 108 which controls the engagement of the forward gear immediately below the current gear and then to the block 86; if not, transition takes place to a block 116 which controls the engagement of the highest starting gear (the seventh) and finally to the block 86.

In the presence of a control ED, the block 80 leads to a block 109 which verifies whether the collar R has been actuated; if so, transition takes place to a block 110 which controls the engagement of the high reverse gear (shown in the Figure by RH, i.e. "HIGH" reverse gear), and then to the block 86. If not, transition takes place to a block 111 which verifies whether the gear currently engaged is the third forward gear or above; if so, transition takes place to a block 117 which verifies whether the gear engaged is lower than or equal to the second gear above the highest starting gear (in this case the ninth). If this is so, transition takes place to a block 112 which controls the engagement of the gear whose number is equivalent to that of the current gear decreased by two units, and then to the block 86; if not, transition takes place to a block 118 which controls the engagement of the highest starting gear and then to the block 86.

If the gear engaged is lower than the third, the block 111 leads to a block 113 which verifies whether the current gear is the second forward gear; if so, transition takes place to a block 114 which controls the engagement of the first forward gear and then to the block 86; if not, the ED request is ignored and the end of the cycle is reached.

In operating terms, the operation of the control device 1 may be summarised as follows.

In driving conditions, when the lever is brought into the position U, the unit 10 controls the engagement of the gear above that currently engaged, or ignores this control if this gear is not admissible; if the control U takes place from the neutral condition, or if the push-button F is simultaneously depressed, the engagement of the highest admissible gear is controlled.

If, again in driving conditions, the driver brings the lever into the position EU, the second gear above the current gear is engaged, if admissible, or the gear immediately above, if admissible; if the control is actuated from a neutral condition, or the push-button F is simultaneously depressed, the highest admissible gear is engaged.

When the lever is brought into the position D, in normal driving conditions, the unit 10 controls the engagement of the gear below the gear currently engaged, or ignores the control if this gear is not admissible; if, however, the control D takes place from the neutral condition, or if the push-button F is simultaneously depressed, the engagement of the lowest admissible gear is controlled, i.e. the gear compatible with a maximum limit of the range of speed of rotation under normal conditions. If the effect of the control D is compared with that of the control U, it can be seen that while the latter produces a unit gear change in an upward direction, or the engagement of the highest possible gear from neutral or using the push-button F, the control D produces a unit downward movement or, from neutral or in combination with the push-button F, the engagement of the lowest admissible gear. Operation is consequently completely "symmetrical" and intuitive.

When, in driving conditions, the driver brings the lever into the position EU, the second gear below the current gear is engaged, if this is admissible in relation to the range of normal operation of the engine, or the gear immediately above, if admissible; if the control is actuated from a neutral condition, or the push-button F is simultaneously pressed, this situation being identified with an emergency condition, the lowest gear compatible with the mechanical integrity of the engine and/or the clutch is engaged.

In practice, when the vehicle is in movement the driver has only to bring the lever into the position U or EU to obtain a single or double upward gear change, and into the position D or ED to obtain a single or double downward gear change. If the change, for any reason, is in the neutral position, it is enough to select the position U or EU to obtain acceleration in maximum torque conditions (economic or slow driving) or the position D to obtain acceleration in maximum power conditions (rapid driving); the same options may also be selected from any gear, by pressing the push-button F simultaneously with the actuation of the lever. The control ED, both from neutral and from an engaged gear, identifies, as mentioned above, an emergency condition and gives rise to the maximum possible downward movement compatible with the mechanical integrity of the motor power unit.

When the vehicle is substantially stationary (v < vₒ), the actuation of the lever 9 produces, in brief, the following effects.

In the position U, the first forward gear is engaged from a reverse gear or from neutral, while the gear immediately above the current gear is engaged from a forward gear if this new gear may allow starting; in the opposite case, the highest starting gear is engaged.

In the position EU, an intermediate starting gear (for instance the fourth) or the highest starting gear (for instance the seventh) if the push-button F is pressed, is engaged from a reverse gear or from neutral. From a forward gear, the second gear above the current gear is engaged if compatible with starting, or the highest starting gear in all other cases.

When the lever is moved into the position D and the collar R is simultaneously raised, the "low" reverse gear is engaged from any ratio currently engaged. If the collar R is not actuated, the control D causes a unit downward change if this leads to a gear adapted to starting, and if not it is ignored.

When the lever is moved into the position ED, and the collar R is simultaneously raised, the "high" reverse gear is engaged from any ratio currently engaged. If the collar R is not actuated, the control D causes a double downward change if this leads to a gear appropriate for starting, or a single change from the second gear, and is ignored in other cases.

In practice, for starting in a forward gear (from neutral or from a reverse gear), the driver may select whether to start with the first gear (control U), an intermediate gear (control EU) or the highest gear (control EU with the function push-button); if a forward gear is already engaged, the operating logic is completely identical to that during driving, the controls U and EU corresponding respectively to a single and double upward gear change, while the controls D and ED correspond to a single and double downward gear change.

The engagement of the low or high reverse gear always requires, for safety reasons, the simultaneous actuation of the lever into the position D or ED and the collar R.

The actuations described above are summarised in Table 1 attached to the present description.

The advantages of the control device 1 of the present invention are evident from an examination of its characteristic features.

In particular, when the vehicle is in movement, the manual controls for gear changes are simple and intuitive, and the driver may therefore carry them out in an instinctive manner without effort and with no distraction from the road; the control device makes it possible to carry out single or multiple gear changes with the possibility of automatically identifying the gear to be engaged as a function of the driving technique (economic or rapid).

Moreover, the controls are designed to prevent the erroneous or accidental engagement of gears incompatible with the correct operation or mechanical integrity of the motor power unit or which are likely to place driving safety at risk.

The simplicity of the manual selection operations and the presence of automatic controls which ignore "incorrect" or dangerous commands allow correct and safe driving and rapid training of the driver.

It is also clear that modifications and variants may be made to the control device without departing from the scope of protection of the attached claims.

In particular, the definitions of the parameters n(max1) and n(max2) may be varied and the starting gears which may be obtained with the control EU may be modified.

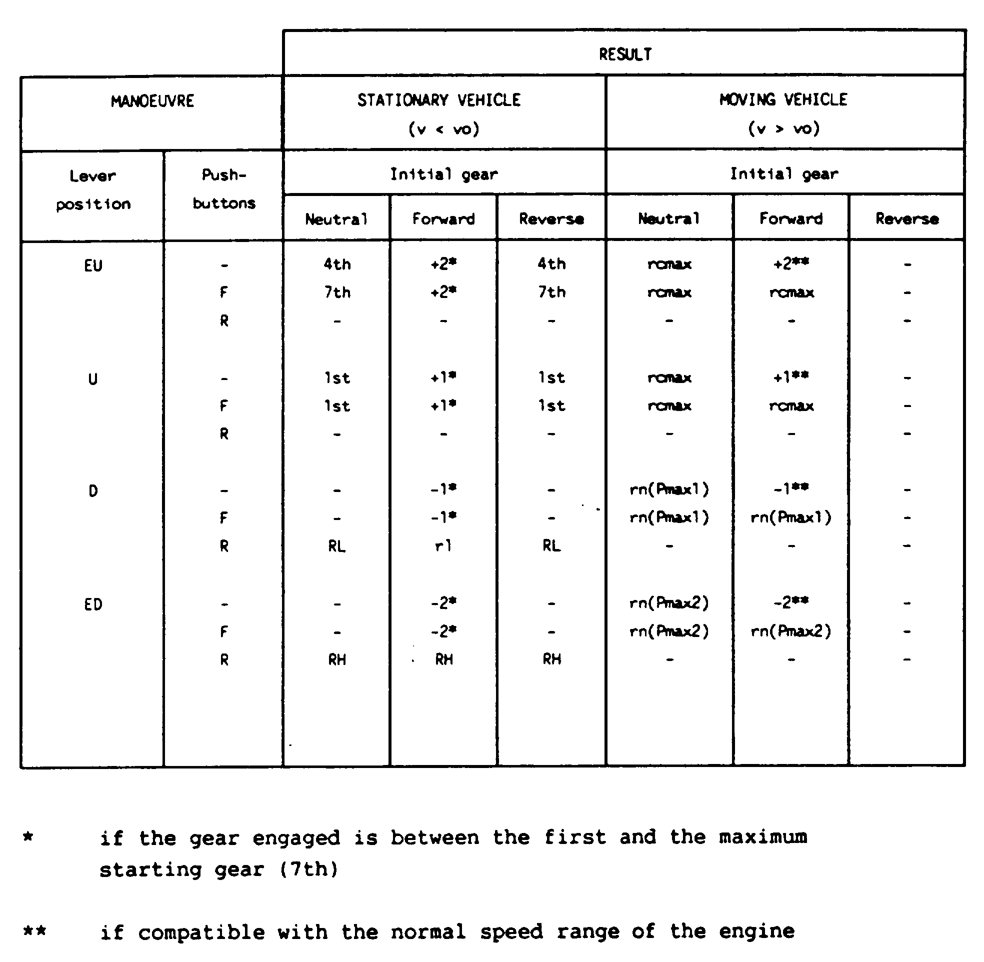

## Claims

1. A control device (1) for an automated transmission (2) of a vehicle comprising a gear change (5) provided with fluid actuator means (6) adapted to control the engagement and disengagement of the gears, this device (1) comprising:
- valve means (8) for controlling the actuator means,
- a microprocessor control unit (10) adapted to generate control signals (12), at least for the valve means (8), in response to input signals (18a, 18b, 18c, 18d),
- a selection lever (9) adapted to be actuated manually by the driver, this lever moving along a plane and adapted to be disposed in four different control positions (U, E, D, ED) from a central rest position (0), a first and a second position (U, EU) being disposed on one side with respect to the rest position (0) and a third and a fourth position (D, ED) being disposed on an opposite side with respect to the rest position (0), the second (EU) and fourth (ED) positions being situated at a greater distance from the rest position (0) than the first (U) and the third (D) positions,
- first sensor means (15) associated with the change (5) and adapted to supply to the control unit (10) first input signals (16) representing the gear engaged,
- second sensor means (24) connected to the control unit and adapted to supply thereto a second input signal (23) indicating the speed of the vehicle,
this lever (9) being provided with switch means (22) adapted to supply to the control unit (10) third input signals (18a) in response to the manual displacement of the lever (9) into one of the control positions (U, EU, D, ED), this lever (9) further comprising at least one push-button (F) which may be actuated manually in combination with the lever (9) and which is adapted to supply to the control unit a fourth input signal (18b),
characterized in that the control unit (10) comprises
means (40, 48, 65, 71) for generating, in the presence of a first input signal (16) indicating the engagement of a forward gear, a second input signal (23) indicating a vehicle speed greater than a predetermined threshold value (vₒ) and a fourth input signal (18b) indicating the absence of actuation of the push-button (F), a control signal (12) for the engagement of the first upper gear, the second upper gear, the first lower gear and the second lower gear respectively, in response to a third input signal (18a) corresponding to the manual displacement of the lever (9) into the first (U), second (EU), third (D) or fourth (ED) position respectively, and
means (37, 58, 74) for generating, in the presence of a first input signal (16) indicating the engagement of a forward gear, a second input signal (23) indicating a vehicle speed greater than this predetermined threshold value and a fourth input signal (18b) indicating the actuation of the push-button, a control signal (12) for the engagement of the highest gear compatible with a range of normal operation of the engine in response to a third input signal (18a) corresponding to the manual displacement of the lever (9) into the first (U) or second position (EU), a control signal (12) for the engagement of the lowest gear compatible with this normal range of operation of the engine in response to a third input signal (18a) corresponding to the manual displacement of the lever (9) into the third position (D), and a control signal (12) for the engagement of the lowest gear compatible with the mechanical strength of the engine and the transmission (2) in response to a third input signal (18a) corresponding to the manual displacement of the lever (9) into the fourth position (ED).

2. A device as claimed in claim 1, characterised in that the lever (9) comprises auxiliary selection means (R) which may be actuated in combination with the lever (9) and are adapted to supplying to the control unit (10) an acceptance signal (18d) for the engagement of a reverse gear (RL, RH).

3. A device as claimed in any one of the preceding claims, characterised in that the control unit (10) comprises means (37) for generating, in the presence of a first input signal (16) indicating a neutral condition of the gear change and a second input signal (23) indicating a vehicle speed greater then the predetermined threshold value (vₒ), a control signal (12) for the engagement of the highest gear compatible with the normal range of operation of the engine in response to a third input signal (18a) corresponding to the manual displacement of the lever into the first (U) or the second (EU) position, a control signal (12) for the engagement of the lowest gear compatible with the normal range of operation of the engine in response to a third input signal (18a) corresponding to the manual displacement of the lever (9) into the third position (D), and a control signal (12) for the engagement of the lowest gear compatible with the mechanical strength of the engine and the transmission (2) in response to a third input signal (18a) corresponding to a manual displacement of the lever (9) into the fourth position (ED).

4. A device as claimed in any one of the preceding claims, characterised in that the control unit comprises means (88, 89, 108, 112) for generating, in the presence of a first input signal (16) indicating the engagement of a forward gear and a second input signal (23) indicating a vehicle speed lower than the predetermined threshold value (vₒ), a control signal (12) for the engagement respectively of the first higher gear, the second higher gear, the first lower gear and the second lower gear in response to a third input signal (18a) corresponding to the manual displacement of the lever (9) into the first (U), second (EU), third (D) and fourth (ED) positions respectively.

5. A device as claimed in any one of the preceding claims, characterised in that the control unit (10) comprises means for generating, in the presence of a first input signal (16) indicating the neutral condition or the engagement of a reverse gear and a second input signal (23) indicating a vehicle speed lower than the predetermined threshold value (vₒ), a control signal (12) for the engagement of the first forward gear in response to a third input signal (18a) corresponding to the manual displacement of the lever into the first position (U), a control signal (12) for the engagement of an intermediate starting gear in response to a third input signal (18a) corresponding to the manual displacement of the lever (9) into the second position (EU), and a control signal (12) for the engagement of the highest starting gear in response to a third input signal (18a) corresponding to the manual displacement of the lever (9) into the second position (EU) in combination with a fourth input signal (18b) indicating the actuation of the push-button (F).

6. A device as claimed in one of claims 2 to 5, characterised in that the control unit (10) comprises means (106, 110) for generating a control signal (12) for the engagement of a first or a second reverse gear (RL, RH), in response to the acceptance signal (18d) in combination with a third input signal (18a) corresponding to the displacement of the lever (9) into the third (D) and the fourth (ED) positions respectively.

7. A device as claimed in any one of the preceding claims, characterised in that the control unit (10) comprises processing means (39, 47, 64, 70) adapted to prevent the engagement of a selected gear if the angular speed of the engine corresponding to this gear is not within the normal range of operation.

8. A device as claimed in any one of the preceding claims, characterised in that the control unit (10) comprises processing means (87, 89; 98, 100; 107, 108; 111, 113, 117) for preventing the engagement of an inappropriate gear for starting in the presence of a second input signal (23) indicating a vehicle speed lower than the predetermined threshold value (vₒ).

## Patentansprüche

1. Steuereinrichtung (1) für ein Automatikgetriebe (2) eines Fahrzeuges, umfassend ein Wechselgetriebe (5), welches mit Fluidstellmitteln (6) versehen ist, die ausgelegt sind, um das Einrücken und Ausrücken der Gänge zu steuern, wobei diese Einrichtung (1) umfaßt:
- Ventilmittel (8) zum Steuern der Stellmittel;
- eine Mikroprozessor-Steuereinheit (10), die ausgelegt ist, um Steuersignale (12) wenigstens für die Ventilmittel (8) im Ansprechen auf Eingangssignale (18a, 18b, 18c, 18d) zu erzeugen;
- einen Wählhebel (9), der dafür ausgelegt ist, um von dem Fahrer manuell betätigt zu werden, wobei sich dieser Hebel entlang einer Ebene bewegt und dafür ausgelegt ist, um in vier unterschiedlichen Steuerpositionen (U, E, D, ED) aus einer zentralen Ruheposition (0) angeordnet zu werden, wobei sich eine erste und eine zweite Position (U, EU), auf einer Seite in Bezug zu der Ruheposition (0) befinden und sich eine dritte und eine vierte Position (D, ED) auf einer entgegengesetzten Seite in Bezug zu der Ruheposition (0) befinden, wobei die zweiten (EU)- und vierten (ED)-Positionen in einem größeren Abstand von der Ruheposition (0) als die ersten (U)- und die dritten (D)-Positionen angeordnet sind;
- eine erste Sensoreinrichtung (15), die dem Wechselgetriebe (5) zugeordnet ist und dafür ausgelegt ist, um an die Steuereinheit (10) erste Eingangssignale (16) zu liefern, die den eingerückten Gang darstellen;
- eine zweite Sensoreinrichtung (24), die mit der Steuereinheit verbunden ist und dafür ausgelegt ist, um daran ein zweites Eingangssignal (23) zu liefern, welches die Geschwindigkeit des Fahrzeugs anzeigt;
wobei dieser Hebel 9 mit Schaltmitteln (22) versehen ist, die ausgelegt sind, um an die Steuereinheit (10) dritte Eingangssignale (18a) im Ansprechen auf die manuelle Versetzung des Hebels (9) in eine der Steuerpositionen (U, EU, D, ED) zu liefern, wobei dieser Hebel (9) ferner wenigstens einen Druckknopf (F) umfaßt, der manuell in Kombination mit dem Hebel (9) betätigt werden kann und der dafür ausgelegt ist, um an die Steuereinheit ein viertes Eingangssignal (18b) zu liefern;
**dadurch gekennzeichnet, daß**
die Steuereinheit 10 umfaßt:
eine Einrichtung (40, 48, 65, 71) zum Erzeugen, beim Vorliegen eines ersten Eingangssignals (16), welches die Einrückung eines Vorwärtsgangs anzeigt, eines zweiten Eingangssignals (23), welches eine Fahrzeuggeschwindigkeit größer als einen vorgegebenen Schwellwert (v₀) anzeigt und eines vierten Eingangssignals (18b), welches das Fehlen einer Betätigung des Druckknopfs (F) anzeigt, eines Steuersignals (12) für die Einrückung des ersten oberen Gangs, des zweiten oberen Gangs, des ersten unteren Gangs bzw. des zweiten unteren Gangs, im Ansprechen auf ein drittes Eingangssignal (18a) entsprechend der manuellen Versetzung des Hebels (9) in die erste (U-), zweite (EU-), dritte (D-) bzw. vierte (ED-) Position; und eine Einrichtung (37, 58, 74) zum Erzeugen, bei Vorliegen eines ersten Eingangssignals (16), welches die Einlegung eines Vorwärtsgangs anzeigt, eines zweiten Eingangssignals (23), welches eine Fahrzeuggeschwindigkeit größer als dieser vorgegebene Schwellwert anzeigt, und eines vierten Eingangssignals (18b), welches die Betätigung des Druckknopfs anzeigt, eines Steuersignals (12) für die Einlegung des höchsten Gangs, welcher mit einem Bereich eines normalen Betriebs der Maschine kompatibel ist, im Ansprechen auf ein drittes Eingangssignal (18a) entsprechend der manuellen Versetzung des Hebels (9) in die erste (U) oder zweite Position (EU), eines Steuersignals (12) für die Einrückung des niedrigsten Gangs, welcher mit diesem normalen Betriebsbereich der Maschine kompatibel ist, im Ansprechen auf ein drittes Eingangssignal (18a) entsprechend der manuellen Versetzung des Hebels (9) in die dritte Position (D), und eines Steuersignals (12) für die Einlegung des niedrigsten Gangs, der mit der mechanischen Stärke der Maschine und des Getriebes (2) kompatibel ist, im Ansprechen auf ein drittes Eingangssignal (18a) entsprechend der manuellen Versetzung des Hebels (9) in die vierte Position (ED).

2. Einrichtung nach Anspruch 1,
**dadurch gekennzeichnet, daß**
der Hebel (9) Hilfswählmittel (R) umfaßt, die in Kombination mit dem Hebel (9) betätigt werden können und dafür ausgelegt sind, an die Steuereinheit (10) ein Annahmesignal (18d) für die Einrückung eines Rückwärtsgangs (RL, RH) zu liefern.

3. Einrichtung nach einem der vorangehenden Ansprüche,
**dadurch gekennzeichnet, daß**
die Steuereinheit (10) umfaßt:
eine Einrichtung (37) zum Erzeugen, bei Vorliegen eines ersten Eingangssignals (16), welche eine neutrale Bedingung des Wechselgetriebes anzeigt, und eines zweiten Eingangssignals (23), welches eine Fahrzeuggeschwindigkeit größer als der vorgegebene Schwellwert (vₒ) anzeigt, eines Steuersignals (12) für die Einrückung des höchsten Gangs, der mit dem normalen Betriebsbereich der Maschine kompatibel ist, im Ansprechen auf ein drittes Eingangssignal (18a) entsprechend der manuellen Versetzung des Hebels in die erste (U-) oder zweite (EU-) Position, eines Steuersignals (12) für die Einrückung des niedrigsten Gangs, welcher mit dem normalen Betriebsbereich der Maschine kompatibel ist, im Ansprechen auf ein drittes Eingangssignal (18a) entsprechend der manuellen Versetzung des Hebels (9) in die dritte Position (D), und eines Steuersignals (12) für die Einrückung des untersten Gangs, der mit der mechanischen Stärke der Maschine und dem Getriebe (2) kompatibel ist, im Ansprechen auf ein drittes Eingangssignal (18a) entsprechend einer manuellen Versetzung des Hebels (9) in die vierte Position (ED).

4. Einrichtung nach einem der vorangehenden Ansprüche,
**dadurch gekennzeichnet, daß**
die Steuereinheit umfaßt:
eine Einrichtung (88, 89, 108, 112), zum Erzeugen, bei Vorliegen eines ersten Eingangssignals (16), welches die Einrückung eines Vorwärtsgangs anzeigt, und eines zweiten Eingangssignals (23), welches eine Fahrzeuggeschwindigkeit kleiner als der vorgegebene Schwellwert (vₒ) anzeigt, eines Steuersignals (12) für die jeweilige Einrückung des ersten höheren Gangs, des zweiten höheren Gangs, des ersten niedrigeren Gangs und des zweiten niedrigeren Gangs im Ansprechen auf ein drittes Eingangssignal (18a) entsprechend der manuellen Versetzung des Hebels (9) in die erste (O-), zweite (EO-), dritte (D-) bzw. vierte ED-Position.

5. Einrichtung nach einem der voranstehenden Ansprüche,
**dadurch gekennzeichnet, daß**
die Steuereinheit (10) umfaßt:
eine Einrichtung zum Erzeugen, bei Vorliegen eines ersten Eingangssignals (16), welches die neutrale Bedingung oder die Einrückung eines Rückwärtsgangs anzeigt und eines zweiten Eingangssignals (23), welches eine Fahrzeuggeschwindigkeit kleiner als der vorgegebene Schwellwert (vₒ) anzeigt, eines Steuersignals (12) für die Einrückung des ersten Vorwärtsgangs im Ansprechen auf ein drittes Eingangssignal (18a) entsprechend der manuellen Versetzung des Hebels in die erste Position (U), eines Steuersignals (12) für die Einrückung eines Zwischen-Startgangs im Ansprechen auf ein drittes Eingangssignal (18a) entsprechend der manuellen Versetzung des Hebels (9) in die zweite Position (EU), und eines Steuersignals (12) für die Einrückung des höchsten Startgangs im Ansprechen auf ein drittes Eingangssignal (18a) entsprechend der manuellen Versetzung des Hebels (9) in die zweite Position (EU) in Kombination mit einem vierten Eingangssignal (18b), welches die Betätigung des Druckknopf (F) anzeigt.

6. Einrichtung nach einem der Ansprüche 2 bis 5,
**dadurch gekennzeichnet, daß**
die Steuereinheit (10) umfaßt:
eine Einrichtung (106, 110) zum Erzeugen eines Steuersignals (12) für die Einrückung eines ersten oder eines zweiten Rückwärtsgangs (RL, RH) im Ansprechen auf das Annahmesignal (18d) in Kombination mit einem dritten Eingangssignal (18a) entsprechend der Versetzung des Hebels (9) in die dritte (D-) bzw. die vierte (ED-) Position.

7. Einrichtung nach einem der vorangehenden Ansprüche,
**dadurch gekennzeichnet, daß**
die Steuereinheit (10) umfaßt:
eine Verarbeitungseinrichtung (39, 47, 64, 70), die ausgelegt ist, um die Einrückung eines gewählten Gangs zu verhindern, wenn die Drehgeschwindigkeit der Maschine entsprechend diesem Gang nicht innerhalb des normalen Betriebsbereichs ist.

8. Einrichtung nach einem der vorangehenden Ansprüche,
**dadurch gekennzeichnet, daß**
die Steuereinheit (10) umfaßt:
eine Verarbeitungseinrichtung (87, 89; 98 100; 107, 108; 111, 113, 117) zum Verhindern der Einrückung eines ungeeigneten Gangs zum Starten bei Vorliegen eines zweiten Eingangssignals (23), welches eine Fahrzeuggeschwindigkeit anzeigt, die kleiner als der vorgegebene Schwellwert (v₀) ist.

## Revendications

1. Dispositif de commande (1) pour une transmission automatisée (2) d'un véhicule comprenant une boîte de vitesses (5) équipée de moyens actionneurs fluidiques (6) aptes à commander l'engagement et le désengagement des vitesses, ce dispositif (1) comprenant :
- des moyens formant soupape (8) pour commander les moyens actionneurs,
- une unité de commande à microprocesseur (10) apte à produire des signaux de commande (12), au moins pour les moyens formant soupape (8), en réponse à des signaux d'entrée (18a,18b,18c,18d),
- un levier de sélection (9) apte à être actionné manuellement par le conducteur, ce levier se déplaçant dans un plan et pouvant être disposé dans quatre positions de commande différentes (U,E,D,ED) à partir d'une position centrale de repos (0), des première et seconde positions (U,EU) étant situées d'un côté par rapport à la position de repos (0), et des troisième et quatrième positions (D,ED) étant situées sur un côté opposé par rapport à la position de repos (0), la seconde position (EU) et la quatrième position (ED) étant situées à une distance plus importante de la position de repos (0) que ne le sont la première position (U) et la troisième position (D),
- des premiersmoyens formant capteur (15) associés à la boîte de vitesses (5) et aptes à envoyer des premiers signaux d'entrée (16) représentant la vitesse engagée, à l'unité de commande (10),
- des seconds moyens formant capteur (24) raccordés à l'unité de commande et aptes à envoyer à cette dernière un second signal d'entrée (23) indiquant la vitesse du véhicule,
ce levier (9) étant équipé de moyens de commutation (22) aptes à envoyer des troisièmes signaux d'entrée (18a) à l'unité de commande (10) en réponse au déplacement manuel du levier (9) dans l'une des positions de commande (U,EU,D, ED), ce levier (9) comprenant en outre au moins un bouton-poussoir (F) qui peut être actionné manuellement en combinaison avec le levier (9) et qui est adapté pour envoyer à l'unité de commande un quatrième signal d'entrée (18b),
caractérisé en ce que l'unité de commande (10) comprend
des moyens (40,48,65,71) pour produire, en présence d'un premier signal d'entrée (16) indiquant l'engagement d'une vitesse de marche avant, un second signal d'entrée (23) indiquant une vitesse de véhicule supérieure à une valeur de seuil prédéterminée (vo) et un quatrième signal d'entrée (18b) indiquant l'absence d'actionnement du bouton-poussoir (F), un signal de commande (12) pour l'engagement respectif de la première vitesse supérieure, de la seconde vitesse supérieure, de la première vitesse inférieure et de la seconde vitesse inférieure, en réponse à un troisième signal d'entrée (18a) correspondant au déplacement manuel du levier (9) amenant ce dernier respectivement dans la première position (U), dans la seconde position (EU), dans la troisième position (D) ou dans la quatrième position (ED), et
des moyens (37,58,74) pour produire, en présence d'un premier signal d'entrée (16) indiquant l'engagement d'une vitesse de marche avant, un second signal d'entrée (23) indiquant une vitesse du véhicule supérieure à cette valeur de seuil prédéterminée, et un quatrième signal d'entrée (18b) indiquant l'actionnement du bouton-poussoir, un signal de commande (12) pour l'engagement de la vitesse maximale compatible avec une gamme de fonctionnement normale du moteur en réponse à un troisième signal d'entrée (18a) correspondant au déplacement manuel du levier (9) dans la première position (U) ou dans la seconde position (EU), un signal de commande (12) pour l'engagement de la vitesse la plus faible compatible avec cette gamme normale de fonctionnement du moteur en réponse à un troisième signal d'entrée (18a) correspondant au déplacement manuel du levier (9) dans la troisième position (D), et un signal de commande (12) pour l'engagement de la vitesse la plus faible compatible avec la résistance mécanique du moteur et de la transmission (2) en réponse à un troisième signal d'entrée (18a) correspondant au déplacement manuel du levier (9), dans la quatrième position (ED).

2. Dispositif selon la revendication 1, caractérisé en ce que le levier (9) comprend des moyens de sélection auxiliaires (R), qui peuvent être actionnés en combinaison avec le levier (9) et sont adaptés pour envoyer à l'unité de commande (10) un signal d'acceptation (18d) pour l'engagement d'une vitesse de marche arrière (RL,RH).

3. Dispositif selon l'une quelconque des revendications précédentes, caractérisé en ce que l'unité de commande (10) comprend des moyens (37) pour produire, en présence d'un premier signal d'entrée (16) indiquant une condition neutre de la boîte de vitesses, et d'un second signal d'entrée (23) indiquant une vitesse du véhicule supérieure à la valeur de seuil prédéterminée (vo), un signal de commande (12) pour l'engagement de la vitesse la plus élevée compatible avec la gamme normale de fonctionnement du moteur en réponse à un troisième signal d'entrée (18a) correspondant au déplacement manuel du levier dans la première position (U) ou dans la seconde position (EU), un signal de commande (12) pour l'engagement de la vitesse la plus faible compatible avec la gamme normale de fonctionnement du moteur en réponse à un troisième signal d'entrée (18a) correspondant au déplacement manuel du levier (9) dans la troisième position (D), et un signal de commande (12) pour l'engagement de la vitesse la plus faible compatible avec la résistance mécanique du moteur et de la transmission (2) en réponse à un troisième signal d'entrée (18a) correspondant à un déplacement manuel du levier (9) dans la quatrième position (ED).

4. Dispositif selon l'une quelconque des revendications précédentes, caractérisé en ce que l'unité de commande comprend des moyens (88,89,108,112) pour produire, en présence d'un premier signal d'entrée (16) indiquant l'engagement d'une vitesse de marche avant et d'un second signal d'entrée (23) indiquant une vitesse du véhicule inférieure à la valeur de seuil prédéterminée (vo), un signal de commande (12) pour l'engagement respectivement de la première vitesse supérieure, de la seconde vitesse supérieure, de la première vitesse inférieure et de la seconde vitesse inférieure en réponse respectivement à un troisième signal d'entrée (18a) correspondant au déplacement manuel du levier (9) amenant ce dernier respectivement dans la première position (U), dans la seconde position (EU), dans la troisième position (D) et dans la quatrième position (ED).

5. Dispositif selon l'une quelconque des revendications précédentes, caractérisé en ce que l'unité de commande (10) comprend des moyens pour produire, en présence d'un premier signal d'entrée (16) indiquant la condition neutre ou l'engagement d'une vitesse de marche arrière et d'un second signal d'entrée (23) indiquant une vitesse du véhicule inférieure à la valeur de seuil prédéterminée (vo), un signal de commande (12) pour l'engagement de la première vitesse de marche avant en réponse à un troisième signal d'entrée (18a) correspondant au déplacement manuel du levier dans la première position (U), un signal de commande (12) pour l'engagement d'une vitesse intermédiaire de démarrage en réponse à un troisième signal d'entrée (18a) correspondant au déplacement manuel du levier (9) dans la seconde position (EU), et un signal de commande (12) pour l'engagement de la vitesse maximale de démarrage en réponse à un troisième signal d'entrée (18a) correspondant au déplacement manuel du levier (9) dans la seconde position (EU), en combinaison avec un quatrième signal d'entrée (18b) indiquant l'actionnement du bouton-poussoir (F).

6. Dispositif selon l'une quelconque des revendications 2 à 5, caractérisé en ce que l'unité de commande (10) comprend des moyens (106,110) pour produire un signal de commande (12) pour l'engagement d'une première vitesse de marche arrière ou d'une seconde vitesse de marche arrière (RL,RH), en réponse au signal d'acceptation (18d) en combinaison avec un troisième signal d'entrée (18a) correspondant au déplacement du levier (9) respectivement dans la troisième position (D) et dans la quatrième position (ED).

7. Dispositif selon l'une quelconque des revendications précédentes, caractérisé en ce que l'unité de commande (10) comprend des moyens de traitement (39,47, 64,70) aptes à empêcher l'engagement d'une vitesse sélectionnée si la vitesse angulaire du moteur correspondant à cette vitesse n'est pas située dans la gamme normale de fonctionnement.

8. Dispositif selon l'une quelconque des revendications précédentes, caractérisé en ce que l'unité de commande (10) comprend des moyens de traitement (87,89;98,100; 107,108;111,113,117) pour empêcher l'engagement d'une vitesse inappropriée pour le démarrage en présence d'un second signal d'entrée (23) indiquant une vitesse du véhicule inférieure à la valeur de seuil prédéterminée (vo).
